# EUROPÄISCHE PATENTSCHRIFT

(11) **EP 1 537 367 B1**
(45) Veröffentlichungstag und Bekanntmachung des Hinweises auf die Patenterteilung: **30.11.2011**
(21) Anmeldenummer: 02754098.8
(22) Anmeldetag: 28.08.2002
(51) Int. Cl.: F25B 6/04, F25B 25/00, F25B 40/00

(54) **ZWEISTUFENVERDAMPFUNG MIT INTEGRIERTER FLÜSSIGKEITSUNTERKÜHLUNG UND SAUGDAMPFÜBERHITZUNG IN FREQUENZGESTEUERTER MODULTECHNIK**
TWO-STAGE EVAPORATION SYSTEM COMPRISING AN INTEGRATED LIQUID SUPERCOOLER AND A SUCTION VAPOUR SUPERHEATER ACCORDING TO FREQUENCY-CONTROLLED MODULE TECHNOLOGY
EVAPORATEUR A DEUX ETAGES A SOUS-REFROIDISSEMENT DE FLUIDE ET SURCHAUFFE DE VAPEUR D'ASPIRATION INTEGRES DANS UNE INSTALLATION MODULAIRE REGULEE EN FREQUENCE

(43) Veröffentlichungstag der Anmeldung: 08.06.2005
(73) Patentinhaber: BMS-Energietechnik AG, 3812 Wilderswil (CH)
(72) Erfinder: MEISTER, Remo, CH-3658 Merligen/Sigriswil (CH)
(74) Vertreter: Ottow, Jens M.
(86) Internationale Anmeldenummer: PCT/CH2002/000470
(87) Internationale Veröffentlichungsnummer: WO 2004/020918

(56) Entgegenhaltungen:
- DE-A- 19 805 285
- DE-U- 29 800 048
- GB-A- 2 175 679
- US-A- 5 092 138
- US-A- 5 243 837
- US-B1- 6 185 946
- US-B1- 6 220 337
- US-B1- 6 263 964

## Beschreibung

### Technisches Gebiet:

Kühl- und Tiefkühlanlagen, Kältetechnik, Kältemaschine für Kühl- und Heizbetrieb, Kälteanlagen, Kältesätze, Wärmepumpen, Energierückgewinnung, Abwärmenutzung: Modultechnik, welche zum Kühlen und / oder Heizen von diversen Medien wie Flüssigkeiten, Luft, Gasen oder anderen Energieträgem verwendet wird.

### Stand der Technik:

Frequenzgesteuerte Kältemittelverdichter, Kältesätze, Unterkühlung, Energiespeicherung sind einzeln, aber nicht in der Kombination, wie hier vorgestellt, bekannt und kennen in dieser Kombination auch den Einsatz des neu erfundenen und hier auch zum Patent angemeldeten Zweistufenverdampfers mit integrierter Flüssigkeitsunterkühlung und Saugdampfüberhitzung nicht.

Stand der Technik sind auch Anlagen mit einstufiger Unterkühlung, Saugdampfüberhitzung, Direktverdampfungsanlagen für Kältemittel, Wärmeträger-Kühlanlagen (Sekundärkühler), Kaskadenkühlanlagen, Boosterkühlanlagen, Kühlanlagen mit Trockenexpansion (trockener Verdampfer), Thermosyphonsysteme (überflutete Verdampfer) und Kältesätze.

Der Einsatz von frequenzgesteuerten Kältemittelverdichtem, modularem Aufbau von Kältesätzen, Unterkühlung und Energiespeicherung dienen bis heute nicht dafür, dass man so kleine Kältemittelverdichter, wie hier vorgestellt, einsetzen und damit sehr hohe Leistungsspitzen eines geforderten Kältebedarfs direkt über die erzeugte mechanische Kälteleistung abdecken kann.

Aus der Druckschrift US 5 243 837 ist ein Unterkühlungssystem für nicht-azeotrope Kältemittel bekannt, bei dem das den Kondensator verlassende Kältemittel Wärme mit dem im Verdampfer verdampfenden Kältemittel austauscht. Der Wärmeaustausch wird durch einen internen Unterkühler bewirkt. Die Verdampfung erfolgt hierbei in dem Verdampfer einstufig und vollständig.

Nur die Kombination von Zweistufenverdampfung mit integrierter Flüssigkeitsunterkühlung und Saugdampfüberhitzung (4/5) in frequenzgesteuerter Modultechnik (10/11) mit mehrstufiger Unterkühlung (6) gemäss den Ansprüchen 1-11 garantiert die Erreichung der nachfolgenden Ziele.

### Detaillierte Darstellung der Erfindung:

Ziel der Erfindung ist es, bei Kühl-/Triefkühlanlagen, Kältemaschinen für Kühl- und Heizbetrieb, Kälteanlagen, Kältesätzen, Wärmepumpen und allen Anlagen mit Einsatz von Kältemittel und Kälteträgern folgendes zu erreichen: Tiefer Energieverbrauch, hohe Betriebssicherheit, hohe Verfügbarkeit der Kälte, geringe Servicekosten, schnelle Reaktionszeit (bis der Schaden behoben ist, egal welcher Art der Schaden ist), einfache Anlagentechnik, einfacher Systemausbau, günstige Investitionskosten, Schutz der Investition, grosse Unabhängigkeit (von Produkten, Kältemittel, etc.).

Die COP-Werte und die Betriebssicherheit drastisch zu erhöhen, die Unterhalts-, Betriebs- und Investitionskosten drastisch zu senken, die Möglichkeit, sehr kleine Kältemittelverdichter (1) im Verhältnis zur maximal abzuführenden Kälteleistung einzusetzen, über den grössten Zeitraum eines Standard-Kühlungsprozesses mit sehr hohen Wirkungsgraden und sehr kleinen Kältemittelverdichterleistungen die Kälteleistung zu erzeugen und dabei sehr hohe Kälteleistungsspitzen abzudecken (Verhältnis von Minimalbedarf zum Durchschnittsbedarf und Maximalbedarf an Kälteleistung über einen kurzen oder langen Zeitraum betrachtet).

Im weiteren sind obige Ziele mit sehr wenig einzusetzenden Komponenten (9) und kältetechnischen Hilfsstoffen sowie einem Minimum an benötigtem Kältemittel zu erreichen.

Die Kälteenergie zu Zeiten zu erzeugen und zu speichern (12), in denen wenig Kälteenergie benötigt wird (27).

Diese Energie (27) zur Abdeckung von Kälteleistungsspitzen zu verwenden und dadurch einen gleichmässigeren Energieaufwand und -bedarf und gleichmässigere Betriebszustände (längere Laufzeiten mit weniger EIN/AUS-Zyklen der Verdichter) zu erhalten

Die Erfindung beruht auf der Kombination und Weiterentwicklung obiger Systeme in modular aufgebauten Kälteanlagen (11) (Kältesätzen).

### Modultechnik

Unter Modultechnik (11) (Kältesätze) verstehen wir eine anschlussfertige Kälteanlage pro Modul (11) (Kältesatz) wobei die Module (11) parallel miteinander zu einem Kältesystem verbunden werden.

Verschiedene Leistungsgrössen von Modulen (11) werden eingesetzt und es können mehrere Module (11) an ein Kältesystem angeschlossen werden.

Je nach Bedarf kann für ein System mit einem oder mehreren Modulen (11) begonnen und dieses später durch weitere Module (11) ausgebaut werden.

Es können mehrere Systeme miteinander kombiniert werden und die einzelnen Module (11) sind transportabel und anschlussfertig.

Durch den Einsatz der Frequenzregelung (10) und der Parallelschaltung der Module (11) können für heute übliche Prozesse, mit wesentlich kleineren Kältemittelverdichtern (1), Spitzenlasten abgedeckt werden.

Die Kältemittelverdichterleistung wird durch den Einsatz eines speziellen, zweistufigen Verdampfers mit integrierter Flüssigkeitsunterkühlung und Saugdampfüberhitzung (4 / 5) wesentlich gesteigert.

Infolge der Modultechnik (11) erhöht sich die Verfügbarkeit der maschinell erzeugten Kälte wesentlich gegenüber üblicher Einzel- oder Verbundanlagen.

Beim Ausfall eines Kältemoduls (11) wird die fehlende Kälteleistung über die Drehzahlerhöhung der anderen Kältemittelverdichter (Frequenzregelung) (10) teilweise oder ganz kompensiert.

Durch den Einsatz der speziellen Zweistufenverdampfertechnik mit integriertem Flüssigkeitsunterkühler / Saugdampfüberhitzer (4 / 5) und einer Zwei- oder Mehrstufenunterkühlung (6) ist es uns möglich, einen Teil der geforderten Kälteleistung in der Zeit zu erzeugen und zu speichern (12 / 27), in der wenig Kältebedarf herrscht und in der Zeit von grossem Kältebedarf zur Deckung dieser Spitzenlasten für die Leistungssteigerung durch die externe Unterkühlungsstufe (6 / 27) bereit zu stellen, ohne dass eine tiefere Verdampfungstemperatur (31) während der Speicherung nötig ist.

Die gespeicherte Kälteenergie (12/27) dient dabei zur Flüssigkeitsunterkühlung des Kältemittels (externe Unterkühlung) (6/27).

Andere Energiequellen können ebenfalls zur Kältemittelunterkühlung (6) herangezogen werden.

Eine weitere Stufe der Flüssigkeitsunterkühlung des Kältemittels wird mittels Verdampfung des Kältemittels und Saugdampf der Kälteanlage (interne Unterkühlung) (5) realisiert.

Die Erfindung dieses Verdampfungsprozesses mit Flüssigkeitsunterkühlung und Saugdampfüberhitzung (4 / 5) begründet sich auf folgendem:

### Bekannt:

Bekannt sind Trockenexpansionssysteme (trockener Verdampfer) mit Einspritzventil, bei dem ein überhitztes und gasförmiges Kältemittel den Verdampfer verlässt (20).

Bekannt sind Thermosyphonsysteme (überfluteter Verdampfer), bei denen flüssiges Kältemittel in den Verdampfer geführt wird und überhitztes, gasförmiges oder nicht überhitztes und mit Flüssigkeitsanteilen versehenes Kältemittel in einen Abscheider strömt und von dort gasförmig und ohne Flüssigkeitsanteile zum Kältemittelverdichter geführt wird.

Bekannt sind Kältesysteme, bei denen ein Wärmeaustausch zwischen gasförmigem und flüssigem Kältemittel zur Unterkühlung der Flüssigkeit und zur Überhitzung des Saugdampfes realisiert wird (Flüssigkeits-Saugdampf-Wärmetauscher).

Bekannt sind Kombinationen mit Abwärmenutzung und Kaskaden-Kälteanlagen

### Neu:

Neu an unserer Erfindung ist, dass ein Verdampfungssystem mit Trockenexpansion als überfluteter Verdampfer (4) eingesetzt wird, bei dem das Kältemittel den Verdampfer in der ersten Stufe mit Flüssigkeitsanteilen verlässt (21).

Neu an unserer Erfindung ist, dass das Kältemittel als Flüssigkeits-/Gasgemisch mit hohem Gasanteil in eine zweite Verdampfungsstufe (5/21) eintritt (trockener Verdampfer), bei der eine Restverdampfung mit anschliessend hoher Überhitzung des Kältemittels (22) und einer gleichzeitigen Unterkühlung des flüssigen Kältemittels auf der zweiten Seite des Wärmetauschers stattfindet (23).

Neu an unserer Erfindung ist, dass das verwendete, ausserhalb oder innerhalb des Verdampfers eingebaute Expansionsventil (2) die Grösse der Saugdampftemperatur am Eintritt des Kältemittelverdichters (1/22) beschränkt und zugleich die Leistung der internen Unterkühlung (5 / 23) in Abhängigkeit der zur Verfügung stehenden Verdampferleistung (5/24) der ersten Stufe (4 / 25) regelt.

Neu an unserer Erfindung ist im weiteren auch das Zusammenwirken all dieser Komponenten wie Modulbauweise (11) (Kältesatz), Frequenzregelung der Kältemittelverdichter (10), Parallelschaltung der Kältemittelverdichterkreisläufe, Zweistufenverdampfung mit interner Flüssigkeitsunterkühlung und Saugdampfüberhitzung (4/5), Zwei- oder Mehrstufenunterkühlung (5/6), Verlagerung und Speicherung der Kälteenergie von Zeiten mit wenig Bedarf nach Zeiten mit hohem Bedarf (12 / 27), integrierte Abwärmenutzung (7 / 8), wobei durch die interne Unterkühlung (5/23) höhere Temperaturen zur Abwärmenutzung (7/8/26) zur Verfügung stehen.
Kombinationen aller Art von Abwärmenutzung, Kaskaden- und Notbetrieb auf Modul-, Anlagen- oder Systemebene sind möglich.

### Anforderung an die Modultechnik

Anforderung an die Modultechnik (11) ist höchste Betriebssicherheit, tiefe Betriebskosten, tiefe Unterhaltskosten, einfache Anlagentechnik, einfache Leistungsanpassung an benötigte Kälteleistung (Ausbauetappen) und einfache und flexible Anpassung an mögliche Abwärmenutzungen (7 / 8).

### Energieeinsparung auf 3 Ebenen

Energieeinsparung auf 3 Ebenen ist durch mehrstufige Unterkühlung (5 / 6), durch Leistungsverschiebung (zum Beispiel vom Tag in die Nacht (12 / 27) und durch Frequenzregelung (10) realisiert was alles tiefe Betriebskosten zur Folge hat.

### Zusätzliche Optimierungen

Zusätzliche Optimierungen der Betriebskosten werden erreicht durch tiefere Verflüssigungstemperaturen in der Nacht, durch höhere Verdampfungstemperaturen (Kaltsoletemperaturanhebung), durch höhere Gasaustrittstemperaturen (Abwärmenutzung (7/8/26)), durch bessere Wirkungsgrade (überdimensionierte Anlagen arbeiten im Teillastbereich nicht optimal).

Weiteren Betriebskostenoptimierungen sind die zu vernachlässigenden Druckabfälle in den Leitungen, eine mögliche, teilweise Stromverlagerung (vom Tag in die Nacht) (12 / 27) welche nicht zu Lasten einer tieferen Verdampfungstemperatur (31) geht, eine gleichmässige Laufzeit der Kältemittelverdichter (1) - wenige Ein- / Aus-Zyklen welche zusätzlich unterstützt wird durch die Erzeugung der Unterkühlerleistung (6 / 27) während der Nacht (angestrebt wird ein Dauerbetrieb der Kältemittelverdichter (1) - abhängig vom Prozess), weniger und reduzierter Anlaufstrom durch weniger Ein- / Aus-Zyklen, Frequenzumformer (10) und kleinere Kältemittelverdichter (1), sowie hohe COP-Werte (Verhältnis elektrische Energie zu Kälteenergie).

### Betriebssicherheit

Ausfall nur eines Teils des Systems. Die restlichen Module (11) übernehmen einen Teil der fehlenden Kälteleistung bei Ausfall eines Moduls über die Frequenzumformung (10).

Schnelle Reaktionszeit bei Ausfall eines Anlageteils da das Wechseln des ganzen Moduls (11) und die Reparatur in der Werkstatt gemacht werden kann.

Einfache Anlagentechnik (11) da keine Spezialisten notwendig sind.

Hohe Verfügbarkeit infolge mehrerer Module (11) (Kältesätze).

Bei einem Ausfall des Eisspeichers (12 / 27) ist eine Notkühlung für die Unterkühlung (6 / 27) z.B. über das Netzwasser realisiert.

Bei einem Ausfall der Rückkühler (13) ist eine Notkühlung für die Verflüssiger (3) z.B. über das Netzwasser realisiert.

### Einfache Anlagentechnik

Extrem kleine Kältemittelverdichter (1), um eine geforderte Kälteleistungsspitze abzudecken vereinfachen die Kälteanlagetechnik bedeutend.

Dazu kommen die Vorteile von kleineren Rückkühlern (13), keine Öl- und Kältemittelverlagerungen sind möglich, weniger Öl- und Kältemittelinhalt, weniger kältetechnische Apparaturen (9), mehr Gleichzeitigkeit bei der Abwärmenutzung (7 / 8), einer Integration von Tiefkühlanlagen die jederzeit möglich ist (Kaskadenbetrieb), Notkreisläufe (Unterkühlung (6 / 27) / Kondensation (3)) welche ausserhalb der Kältekreisläufe realisiert werden, Saugdampftemperaturen am Kältemittelverdichtereintritt (1/22) und Flüssigkeitsschläge welche unter Kontrolle sind.

### Vorteile im Unterhalt, tiefe Unterhaltskosten

Kleine Systemeinheiten (11) (Kältesatz) haben kleine Komponenten (9/1/2/etc.) und somit tiefe Komponentenpreise, kurze Stillstandzeiten und eine hohe Verfügbarkeit solcher Komponenten.

Bei Ausfall eines Moduls (11) übernehmen die andern Module (11) einen Teil der fehlenden Kälteleistung über die Frequenzumformung (10).

Kurze Reaktionszeiten zum Beheben einer Störung da standardisierte Module (11) Lagerware sind.

Längere Lebensdauer der Kältemittelverdichter (1) durch weniger Ein- / Aus-Zyklen.

### Investitionsvorteile

Eine Grundversorgung kann nach Bedarf erweitert werden sofern die Infrastruktur (Leitungen, etc.) auf Endausbaugrösse installiert ist.

Ein problemloser Standortwechsel der Anlagen ist in Folge der Transportierbarkeit der Module (11) (Kältesätze) gegeben.

Die Produkteunabhängigkeit ist dadurch gegeben, dass Module mit unterschiedlichen Komponenten (Kältemittel, Kältemittelverdichter (1), Wärmeaustauscher (3/4/5/6/7/8), etc.) gebaut werden können.

Vorschriften betreffend Druck, Kältemittel, Füllmengen, etc. sind mit kleinen, in Werkstätten hergestellten Einheiten (11) einfacher und günstiger zu erfüllen.

Einfache Anlagentechnik (11) und dass keine Spezialisten notwendig sind, sind weitere Investitionsvorteile.

### Hauptvorteile

- Betriebssicherheit
- Energieeinsparung
- Kosteneinsparung

### Aufzählung der Zeichnungen:

- Fig. 1: Minimale mögliche Lösung mit zwei unabhängigen Wärmeaustauschern (4 / 5)
- Fig. 2: Minimale mögliche Lösung mit Zweistufenunterkühlung (6 / 5)
- Fig. 3: Mögliche zusätzliche Komponenten pro Modul (7/8/9, nicht abschliessend)
- Fig. 4: Mögliche Systemeinbindung (eine mögliche Variante, nicht abschliessend)

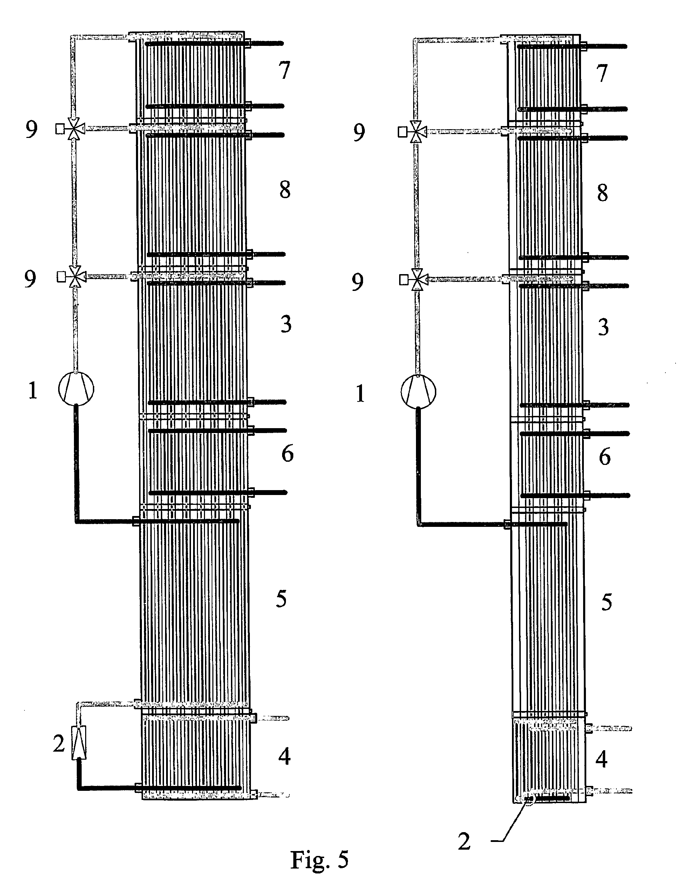

- Fig. 5: Neue Entwicklung eines Kombi-Plattenwärmeaustauschers (3/4/5/6/7/8) als Zweistufenverdampfer (4 / 5) mit integrierter Flüssigkeitsunterkühlung (5) und Saugdampfüberhitzung (5), Verflüssiger/Enthitzer (7), Verflüsger/ Enthitzer (8), Verflüssiger/Rückkühler (3)und Unterkühler erste Stufe (6) und mit externem oder internem Einspritzventil (2).
- Fig. 6: Neue Entwicklung eines Kombi-Plattenwärmeaustauschers (3/4/5/6/7/8) als Zweistufenverdampfer (4 / 5) mit integrierter Flüssigkeitsunterkühlung (5) und Saugdampfüberhitzung (5), Verflüssiger/Enthitzer (7), Verflüssiger/ Enthitzer (8), Verflüssiger/Rückkühler (3)und Unterkühler erste Stufe (6) und mit internem Einspritzventil (2) in anderer Bauweise.

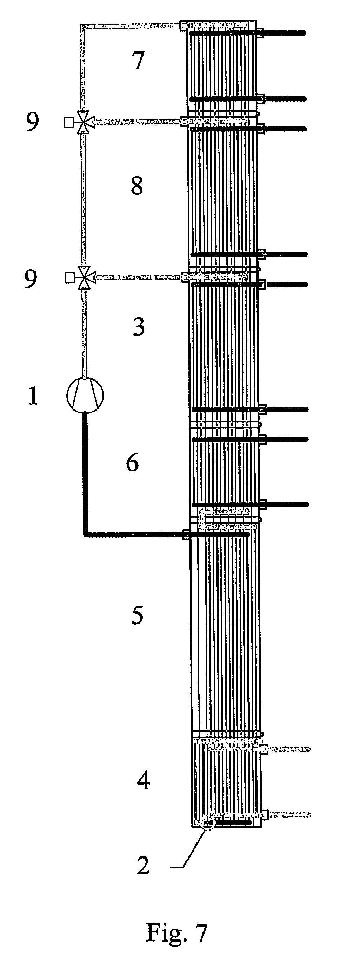

- Fig. 7: Neue Entwicklung eines Kombi-Plattenwärmeaustauschers (3/4/5/6/7/8) als Zweistufenverdampfer (4 / 5) mit integrierter Flüssigkeitsunterkühlung (5) und Saugdampfüberhitzung (5), Verflüssiger/Enthitzer (7), Verflüssiger/ Enthitzer (8), Verflüssiger/Rückkühler (3)und Unterkühler erste Stufe (6) und mit internem Einspritzventil (2) in anderer Bauweise.

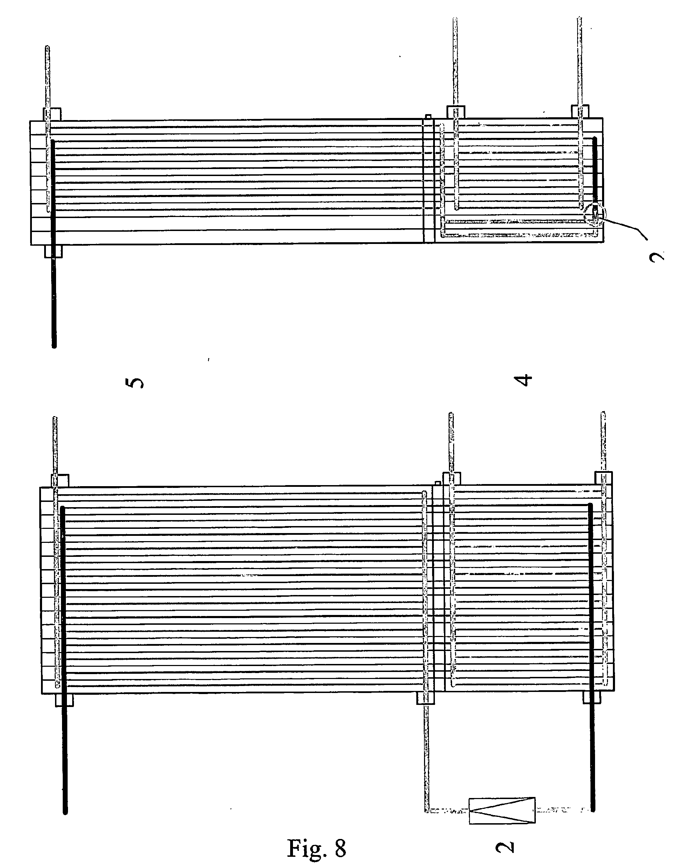

- Fig. 8: Neue Entwicklung eines Zweistufenplattenverdampfers (4 / 5) mit integrierter Flüssigkeitsunterkühlung (5) und Saugdampfüberhitzung (5) mit externem oder internem Einspritzventil (2).

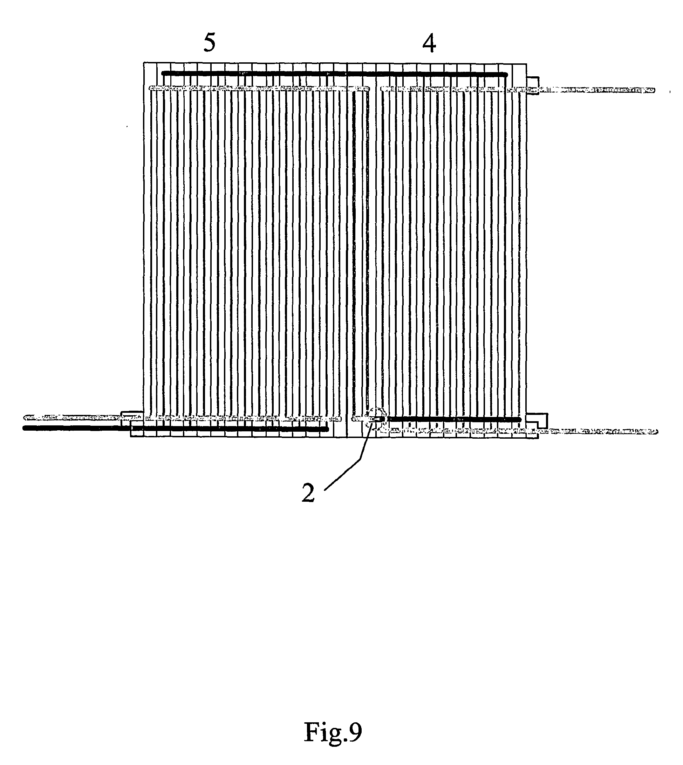

- Fig. 9: Neue Entwicklung eines Zweistufenplattenverdampfers (4/5) mit integrierter Flüssigkeitsunterkühlung (5) und Saugdampfüberhitzung (5) mit externem oder internem Einspritzventil (2) in anderer Bauweise.
- Fig. 10: Diagramm mit der Darstellung der physikalischen Verhältnisse

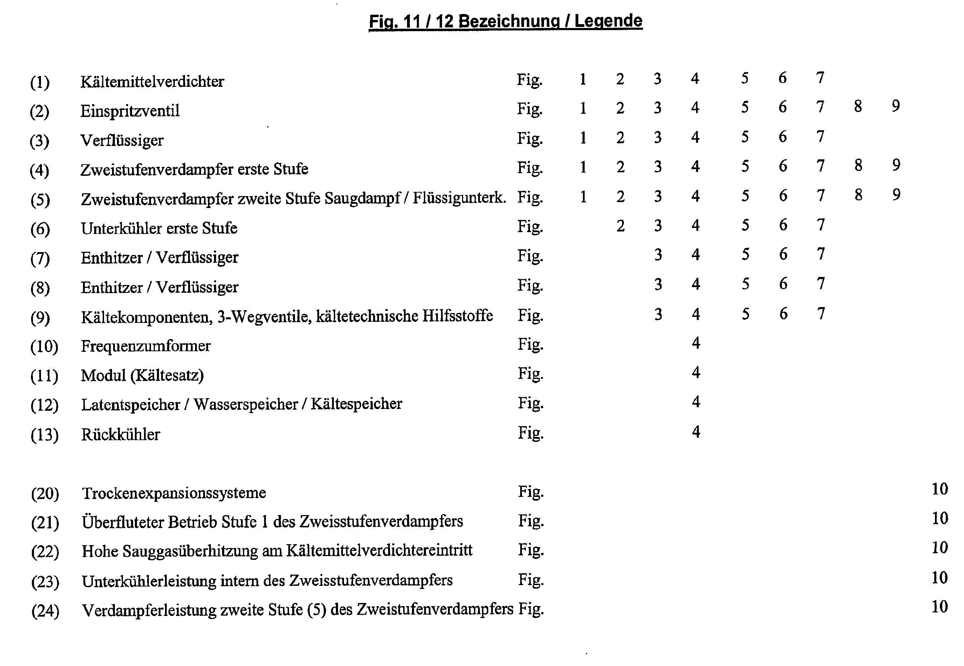

- Fig. 11: Legende und Beschreibung zu den Zeichnungen und Werten in (..)

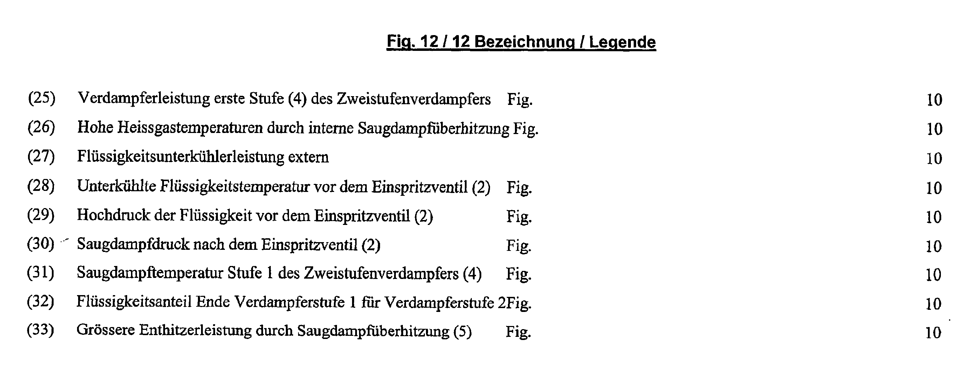

- Fig. 12: Legende und Beschreibung zu den Zeichnungen und Werten in (..)

### Ausführung der Erfindung:

Ein Kältemodul (Kältesatz) (11) besteht im Wesentlichen aus einem oder mehreren:
Verflüssigern (3), Flüssigkeitsunterkühlern (6), Flüssigkeitsunterkühlern/ Saugdampfüberhitzer-Verdampfern (5) (trockener Verdampfer zweite Stufe), Verdampfern (4) (überfluteter Verdampfer, erste Stufe), Kältemittelverdichtern (1), Einspritzventilen (2), Frequenzumformer (10), Kältemittel, kältetechnischen Hilfsstoffen und Öl (9).

Optional weist ein Modul (11) (Kältesatz) zusätzlich einen oder mehrere Enthitzer (7 / 8), einen oder mehrere Abwärmenutzungstauscher (7 / 8), weitere Unterkühler, Schaugläser (9), Trockner (9), Filter, Ventile, Sicherheitsapparaturen, Absperrapparaturen, Sammler (9), Ölpumpen, Verteilsysteme (9), Elektro-, Steuer- und Regelteile (9), kältetechnische Hilfsstoffe, etc. auf.

Die Wärmeaustauscher (3/4/5/6/7/8) können als einzelne Komponenten verrohrt oder als Kombitauscher konstruiert eingesetzt werden.

Das Einspritzventil (2) wird vor dem Verdampfer (4) oder im Verdampfer (4 / 5) (erste Verdampfungsstufe) montiert.

Bei der Montage des Einspritzventils (2) vor dem Verdampfer (4) wird der Messwert zur Saugdampfbegrenzung an der Saugleitung zum Kältemittelverdichter (1/22) abgenommen. Alternativ stehen die Messwerte der unterkühlten Flüssigkeit (28), des Hochdrucks vor dem Einspritzventil (2 / 29) und des Saugdampfdrucks nach dem Einspritzventil (2 / 30) ebenfalls zur Regelung des Zweistufen-Verdampfers mit integriertem Flüssigkeitsunterkühler / Saugdampfüberhitzung (4 / 5) zur Verfügung.

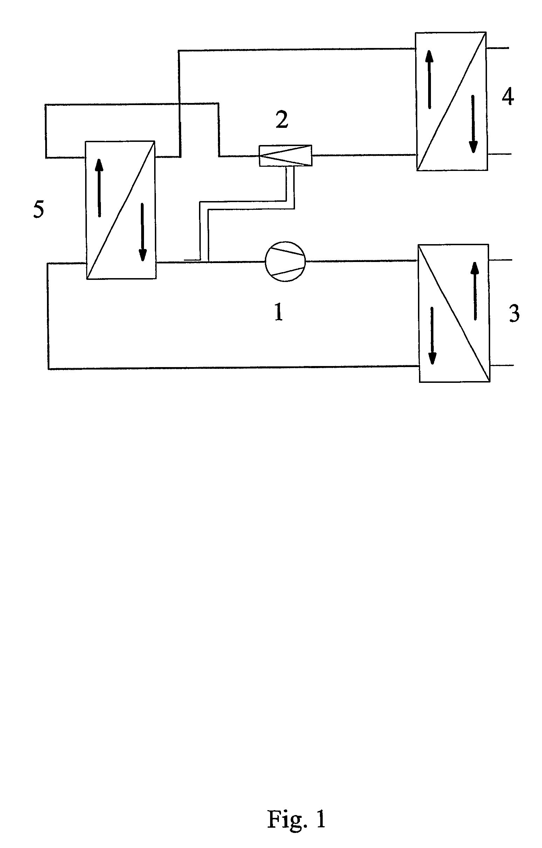

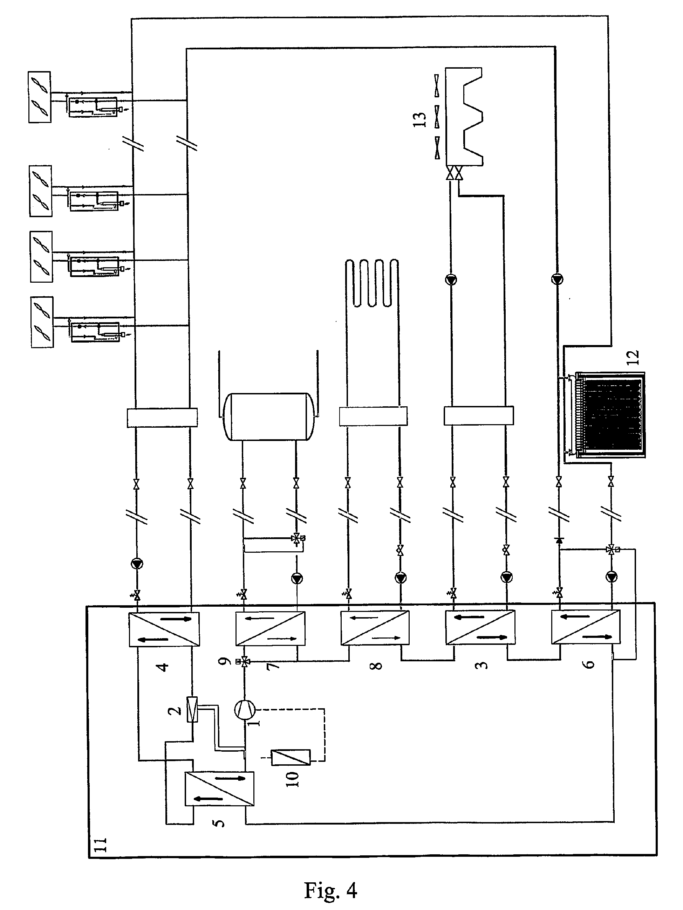

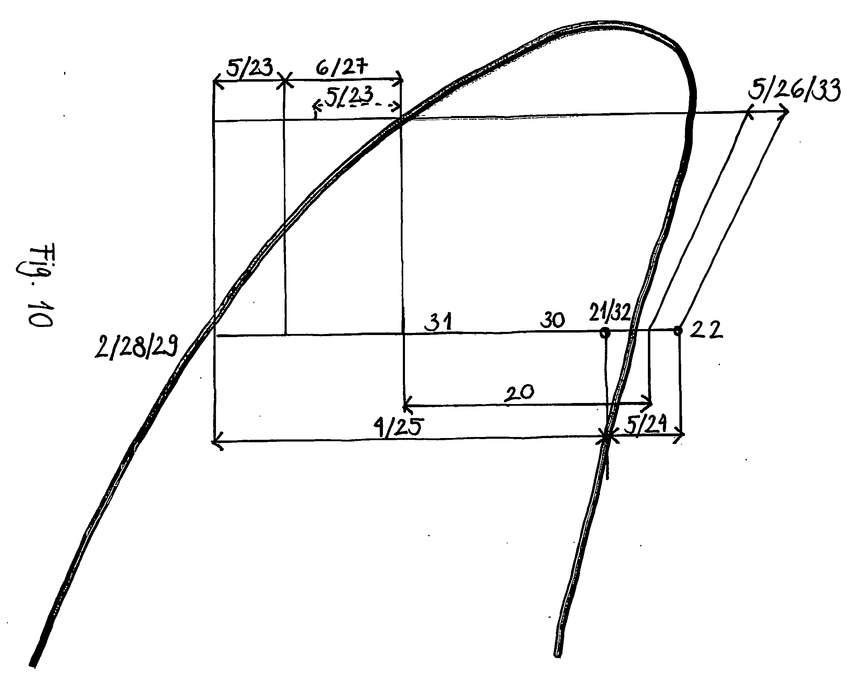

Im Minimum reichen folgende Komponenten (gem. Zeichnung Fig. 1) zum Bauen eines Moduls (11) aus: Kältemittelverdichter (1), Verflüssiger (3), Zweistufenverdampfer mit integriertem Flüssigkeitsunterkühler / Saugdampfüberhitzer (4 / 5), Einspritzventil (2), Kältemittel, kältetechnische Hilfsstoffe (9), Frequenzumformer (Fig. 4; 10), Leitungen und elektrische Steuerungen.

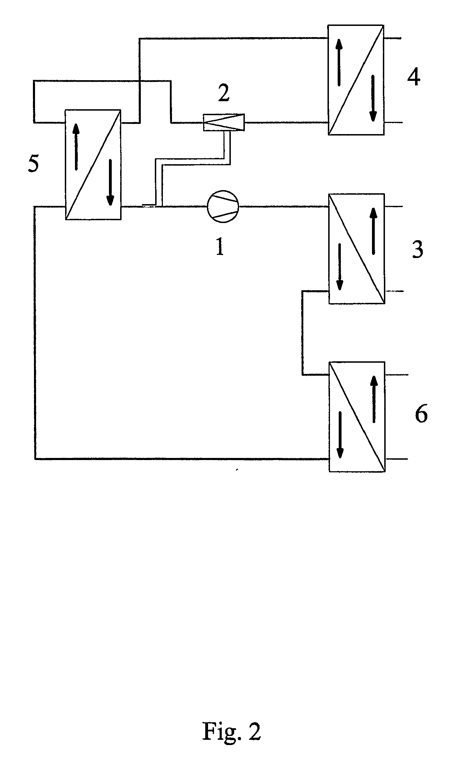

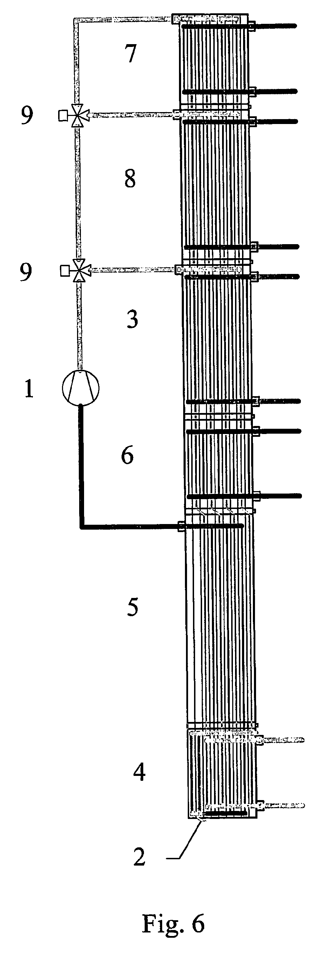

Eine deutliche Leistungssteigerung wird durch das Vorschalten einer oder mehrerer Unterkühlungsstufen (Fig. 2; 6) zu dem integrierten Unterkühler (5) erreicht.

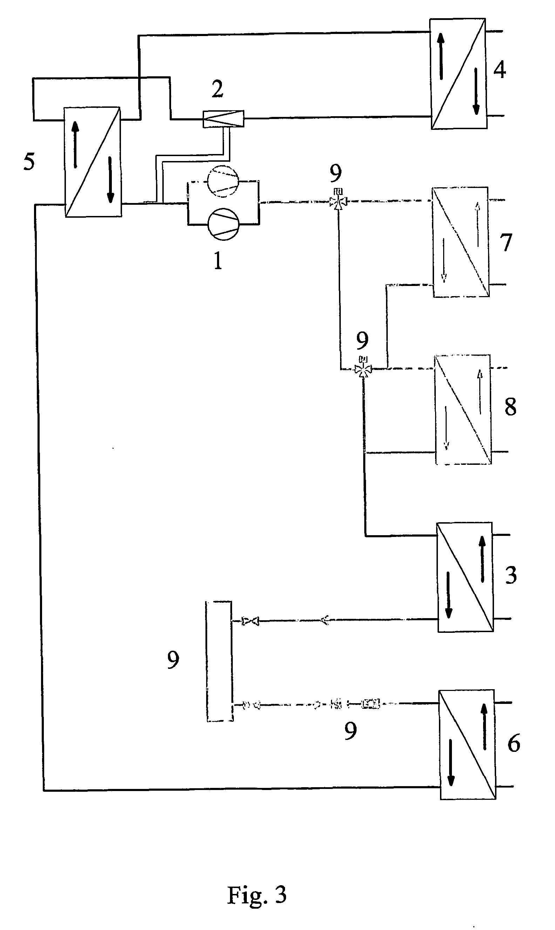

Alle weiteren Kombinationen von Komponenten (Zeichnung Fig. 3 und 4 als Beispiel) dienen nur zur Anpassung an spezielle Kälteprozesse und gelten als bekannt und als Stand der Technik.

## Patentansprüche

1. Kälteanlage in Modulbauweise mit einem oder mehreren parallel angeordneten Modulen bzw. Kältesätzen (11), **dadurch gekennzeichnet, dass** jedes Modul (11) wenigstens einen über einen Frequenzumformer (10) steuerbaren Kältemittelverdichter (1), einen Verflüssiger (3), einen Zweistufenverdampfer mit integriertem Fiüssigkeitsunterkühler/Saugdampfüberhitzer in Form eines internen Wärmetauschers in der zweiten Verdampfungsstufe (4, 5), ein Einspritzventil (2), sowie Leitungen, kältetechnische Hilfsstoffe (9) und eine Kältemittoffollung umfasst, wobei das Kältemittel die als überfluteter Verdampfer ausgelegte erste Verdampfungsstufe mit Flüssigkeitsanteilen verlässt und als Flüssigkeits-/Gasgemisch mit hohem Gasanteil in die als trockener Verdampfer ausgelegte zweite Verdampfungsstufe eintritt, bei der eine Restverdampfung mit anschliessend hoher Überhitzung des Kältemittels und einer gleichzeitigen Unterkühlung des flüssigen Kältemittels auf der zweiten Seite des internen Wärmetauschers stattfindet.

2. Kälteanlage nach Anspruch 1, **dadurch gekennzeichnet, dass** dem Zweistufenverdampfer mit integriertem Flüssigkeitsunterkühler und Saugdampfüberhitzer (4, 5) ein externer Unterkühler (6) vorgeschaltet ist.

3. Kälteanlage nach Anspruch 1 oder 2, **dadurch gekennzeichnet, dass** dem Kältemittelverdichter (1) ein oder mehrere Enthitzer/Verflüssiger (7, 8) zur Abwärmenutzung nachgeschaltet sind.

4. Kälteanlage nach einem der Ansprüche 1-3, **dadurch gekennzeichnet, dass** mehrere Module (11) parallel zu einer Kälteanlage zusammengebaut sind.

5. Kälteanlage nach Anspruch 2, **dadurch gekennzeichnet, dass** der externe Unterkühler (6) in Abhängigkeit des Kältebedarfs zu und wegzuschalten ist.

6. Kälteanlage nach Anspruch 2 oder 5, **dadurch gekennzeichnet, dass** der externe Unterkühler (6) zur Zwischenspeicherung der Kälteenergie mit einem Kältespeicher (12) verbunden ist.

7. Kälteanlage nach Anspruch 2 oder 5, **dadurch gekennzeichnet, dass** die Kälteenergie für den externen Unterkühler (6) aus unabhängigen Quellen wie z.B. Grundwasser stammt.

8. Verfahren zum Betrieb einer Kälteanlage nach Anspruch 1, **dadurch gekennzeichnet, dass** ein Verdampfungssystem mit Trockenexpansion als überfluteter Verdampfer (4) eingesetzt wird, bei dem das Kältemittel den Verdampfer in der ersten Stufe mit Flüssigkeitsanteilen verlässt (21) und das Kältemittel als Flüssigkeits-/Gasgemisch mit hohem Gasanteil in eine als trockener Verdampfer arbeitende zweite Verdampfungsstufe (5/21) eintritt, bei der eine Restverdampfung mit anschliessend hoher Überhitzung des Kältemittels (22) und einer gleichzeitigen Unterkühlung des flüssigen Kältemittels auf der zweiten Seite des internen Wärmetauschers stattfindet (23).

9. Verfahren nach Anspruch 8, **dadurch gekennzeichnet, dass** mittels des Einspritzventils (2) die Grösse der Saugdampftemperatur am Eintritt des Kältemitteiverdichters (1/22) beschränkt und zugleich die Leistung der internen Unterkühlung (5/23) in Abhängigkeit von der zur Verfügung stehenden Verdampferleistung (5/24) der ersten Stufe (4/25) geregelt wird.

10. Verfahren nach Anspruch 9, **dadurch gekennzeichnet, dass** der Messwert zur Saugdampfbegrenzung an der Saugleitung zum Kältemittelverdichter (1/22) abgenommen wird.

11. Verfahren nach Anspruch 9, **dadurch gekennzeichnet, dass** die Messwerte der unterkühlten Flüssigkeit (28), des Hochdrucks vor dem Einspritzventil (2/29) und des Saugdampfdrucks nach dem Einspritzventil (2/30) zur Regelung des Zweistufenverdampfers herangezogen werden.

## Claims

1. Refrigeration plant of modular design having one or more modules or refrigeration sets (11) arranged in parallel, **characterized in that** each module (11) comprises at least one refrigerant compressor (1), which can be controlled by means of a frequency converter (10), a liquefier (3), a two-stage evaporator with integrated liquid supercooler/ suction vapour supercooler in the form of an internal heat exchanger in the second evaporation stage (4, 5), an injection valve (2) and lines, auxiliary refrigeration substances (9) and a refrigerant filling, the refrigerant leaving the first evaporation stage, designed as a flooded evaporator, with liquid fractions and entering the second evaporation stage, designed as a dry evaporator, as a liquid/gas mixture with a high gas fraction, in which second stage residual evaporation with subsequent high superheating of the refrigerant and simultaneous supercooling of the liquid refrigerant takes place on the second side of the internal heat exchanger.

2. Refrigeration plant according to Claim 1, **characterized in that** the supercooler (6) is connected upstream of the two-stage evaporator with integrated liquid supercooler and suction vapour superheater (4, 5).

3. Refrigeration plant according to Claim 1 or 2, **characterized in that** one or more desuperheaters/ liquefiers (7, 8) for waste heat utilization are connected downstream of the refrigerant compressor (1).

4. Refrigeration plant according to one of Claims 1-3, **characterized in that** a number of modules (11) are assembled in parallel to form a refrigeration system.

5. Refrigeration plant according to Claim 2, **characterized in that** the external supercooler (6) can be connected up and disconnected in dependence on the demand for refrigeration.

6. Refrigeration plant according to Claim 2 or 5, **characterized in that** the external supercooler (6) is connected to a refrigeration store (12) for temporary storage of the refrigeration energy.

7. Refrigeration plant according to Claim 2 or 5, **characterized in that** the refrigeration energy for the external supercooler (6) originates from independent sources, such as for example groundwater.

8. Method for operating a refrigeration plant according to Claim 1, **characterized in that** an evaporation system with dry expansion is used as the flooded evaporator (4), in which the refrigerant leaves the evaporator in the first stage with liquid fractions (21) and the refrigerant enters a second evaporation stage (5/21), operating as a dry evaporator, as a liquid/gas mixture with a high gas fraction, in which second stage a residual evaporation with subsequent high superheating of the refrigerant (22) and simultaneous supercooling of the liquid refrigerant takes place on the second side of the internal heat exchanger (23).

9. Method according to Claim 8, **characterized in that** the level of the suction vapour pressure at the inlet of the refrigerant compressor (1/22) is limited and at the same time the power of the internal supercooling (5/23) is controlled in dependence on the available evaporator power (5/24) of the first stage (4/25).

10. Method according to Claim 9, **characterized in that** the measured value for limiting the suction vapour is taken at the suction line leading to the refrigerant compressor.

11. Method according to Claim 9, **characterized in that** the measured values for the supercooled liquid (28), the high pressure upstream of the injection valve (2/29) and the suction vapour pressure downstream of the injection valve (2/30) are used for controlling the two-stage evaporator.

## Revendications

1. Installation de refroidissement équipée de façon modulaire d'un ou de plusieurs modules et/ou ensembles de refroidissement (11) disposés en parallèle, **caractérisée en ce que** chaque module (11) comprend au moins un compresseur de moyen de refroidissement (1) pouvant être commandé via un convertisseur de fréquences (10), un condensateur (3), un vaporisateur à deux étages avec sous-refroidissement de fluide/surchauffe de vapeur d'aspiration intégrés sous la forme d'un échangeur thermique interne dans le deuxième étage d'évaporation (4, 5), une soupape d'injection (2), ainsi que des conduites, des excipients utilisés dans le cadre de la technologie de refroidissement (9) et un remplissage de moyen de refroidissement, le moyen de refroidissement quittant le premier étage d'évaporation prenant la forme d'un vaporisateur immergé avec une certaine teneur fluide et entrant dans le deuxième étage d'évaporation prenant la forme d'un vaporisateur sec sous la forme d'un mélange fluide/gazeux avec une teneur en gaz élevée, le reste de l'évaporation étant ensuite réalisé dans ledit deuxième étage par surchauffe élevée du moyen de refroidissement et par sous-refroidissement simultané du moyen de refroidissement fluide sur le deuxième côté de l'échangeur thermique interne.

2. Installation de refroidissement selon la revendication 1, **caractérisée en ce qu'**un sous-refroidisseur (6) externe est connecté en amont du vaporisateur à deux étages avec sous-refroidissement de fluide et surchauffe de vapeur d'aspiration (4, 5) intégrés.

3. Installation de refroidissement selon la revendication 1 ou 2, **caractérisée en ce qu'**un ou plusieurs désurchauffeurs/condensateurs (7, 8) sont connectés en aval du compresseur de moyen de refroidissement (1) pour utiliser la chaleur dissipée.

4. Installation de refroidissement selon l'une quelconque des revendications 1 à 3, **caractérisée en ce que** plusieurs modules (11) sont assemblés parallèlement à une installation de refroidissement.

5. Installation de refroidissement selon la revendication 2, **caractérisée en ce que** le sous-refroidisseur (6) externe est connecté et déconnecté en fonction des besoins de refroidissement.

6. Installation de refroidissement selon la revendication 2 ou 5, **caractérisée en ce que** le sous-refroidisseur (6) externe est relié à un accumulateur de froid (12) pour permettre une accumulation intermédiaire d'énergie frigorifique.

7. Installation de refroidissement selon la revendication 2 ou 5, **caractérisée en ce que** l'énergie frigorifique utilisée pour le sous-refroidisseur (6) externe provient de sources indépendantes, par exemple de nappes phréatiques.

8. Procédé d'exploitation d'une installation de refroidissement selon la revendication 1, **caractérisé en ce que** le système d'évaporation à expansion de la partie sèche prend la forme d'un vaporisateur immergé (4) dans lequel le moyen de refroidissement quitte le vaporisateur prévu dans le premier étage avec une certaine teneur fluide (21) et que le moyen de refroidissement entre dans un deuxième étage d'évaporation (5/21) fonctionnant comme un vaporisateur sec sous la forme d'un mélange fluide/gazeux à haute teneur en gaz, le reste de l'évaporation dans le deuxième étage se produisant ensuite par surchauffe élevée du moyen de refroidissement (22) et sous-refroidissement simultané du moyen de refroidissement fluide sur le deuxième côté de l'échangeur thermique interne (23).

9. Procédé selon la revendication 8, **caractérisé en ce que** la température de la vapeur d'aspiration est limitée à l'entrée du compresseur de moyen de refroidissement (1/22) grâce à la soupape d'injection (2) et que la puissance du sous-refroidissement interne (5/23) est réglée en même temps en fonction de la puissance du vaporisateur (5/24) mise à disposition au niveau du premier étage (4/25).

10. Procédé selon la revendication 9, **caractérisé en ce que** la valeur mesurée est diminuée pour obtenir la limitation de vapeur d'aspiration au niveau de la conduite l'aspiration conduisant au compresseur de moyen de refroidissement (1/22).

11. Procédé selon la revendication 9, **caractérisé en ce que** les valeurs mesurées du fluide (28) sous-refroidi, de la haute pression régnant avant la soupape d'injection (2/29) et de la pression de la vapeur d'aspiration après la soupape d'injection (2/30) sont rapprochées pour effectuer le réglage du vaporisateur à deux étages.
